(19) Europäisches Patentamt
European Patent Office
Office européen des brevets

(11) Veröffentlichungsnummer: **0 014 378**
**B1**

(12) # EUROPÄISCHE PATENTSCHRIFT

(45) Veröffentlichungstag der Patentschrift: **04.11.81**

(51) Int. Cl.³: **C 09 B 35/46,** C 09 B 35/60, D 06 P 3/32

(21) Anmeldenummer: **80100336.9**

(22) Anmeldetag: **23.01.80**

(54) **Tris- oder Tetrakisazofarbstoffe und deren Verwendung beim Färben von Leder.**

(30) Priorität: **31.01.79 DE 2903588**

(43) Veröffentlichungstag der Anmeldung: **20.08.80 Patentblatt 80/17**

(45) Bekanntmachung des Hinweises auf die Patenterteilung: **04.11.81 Patentblatt 81/44**

(84) Benannte Vertragsstaaten: **BE CH DE FR GB IT**

(56) Entgegenhaltungen:
**DE-A-2 123 688**
**DE-A-2 244 991**
**FR-A-2 200 258**

(73) Patentinhaber: **BASF Aktiengesellschaft, Carl-Bosch-Strasse 38, D-6700 Ludwigshafen (DE)**

(72) Erfinder: **Hansen, Guenter, Dr., Alwin-Mittasch-Platz 8, D-6700 Ludwigshafen (DE)**
Erfinder: **Kolbinger, Hans Joergen, Dr., Westring 60, D-6718 Gruenstadt 1 (DE)**
Erfinder: **Scheuermann, Horst, Dr., Bexbacher Strasse 41, D-6700 Ludwigshafen (DE)**
Erfinder: **Zeidler, Georg, Mutterstadter Strasse 19, D-6701 Dannstadt-Schauernheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 014 378 B1

BUNDESDRUCKEREI BERLIN

# Tris- oder Tetrakisazofarbstoffe und deren Verwendung beim Färben von Leder

Die Erfindung betrifft Verbindungen, die in Form der freien Säuren der allgemeinen Formel I

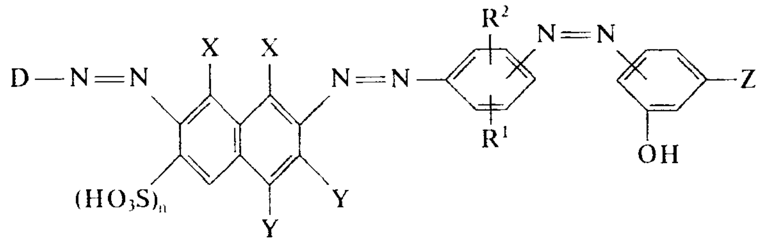

(I)

entsprechen,
in der

D den Rest einer Diazokomponente oder einen Rest der Formel

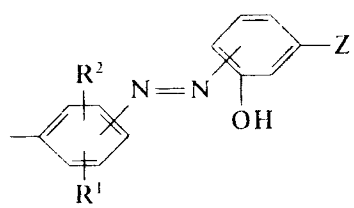

n die Zahlen 0 oder 1,
$R^1$ Wasserstoff, Chlor, Brom, Methyl, Äthyl, Methoxy, Äthoxy, Carboxyl, Trifluormethyl, Methylsulfonyl, Äthylsulfonyl oder Hydroxysulfonyl,
$R^2$ Wasserstoff, Chlor, Brom, Methyl, Methoxy, Carbamoyl oder Sulfamoyl, ein Rest
X Hydroxy und der andere Rest
X Amino,
Y Wasserstoff oder Hydroxysulfonyl, wobei ein Rest Y Hydroxysulfonyl ist, und
Z einen Rest der Formel

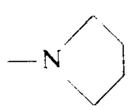 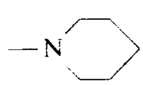 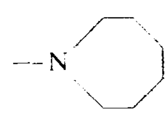 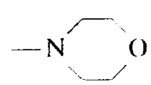 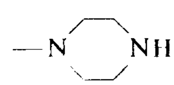

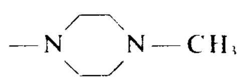 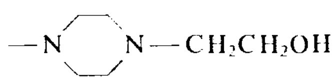 oder 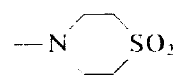

bedeuten, wobei die Reste $R^1$ und $R^2$ unabhängig voneinander die angegebenen Bedeutungen haben können.

Die Reste D entstammen vorwiegend der Benzolreihe, weiterhin sind Naphthalinderivate und Heterocyclen wie Benzthiazole oder Thiazole geeignet.

Als Substituenten für die Reste D sind in der Benzolreihe z. B.: Chlor, Brom, $C_1$- bis $C_4$-Alkyl, $C_1$- bis $C_4$-Alkoxy, Phenoxy, $C_1$- bis $C_4$-Alkylsulfonyl, Trifluormethyl, Carboxyl, Hydroxysulfonyl, gegebenenfalls substituiertes Carbamoyl oder Sulfamoyl sowie gegebenenfalls substituiertes Phenylazo zu nennen.

Gegebenenfalls substituierte Carbamoyl-, Sulfamoyl- und Phenylazoreste sind beispielsweise:

$CONH_2$ $CONHCH_3$ $CONHC_2H_5$ $CONHC_3H_7$

$CONHC_4H_9$ $CONHC_6H_{13}$ $CONHC_8H_{17}$

$CONHCH_2CH(C_4H_9)-C_2H_5$ $CON(CH_3)_2$ $CON(C_2H_5)_2$ $CON(C_3H_7)_2$

$CON(C_4H_9)_2$ $CONHC_2H_4OH$ oder $CON(C_2H_4OH)-C_2H_5$

sowie die entsprechenden Sulfamoylreste und

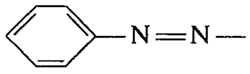
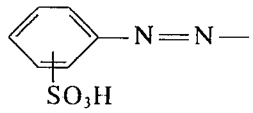
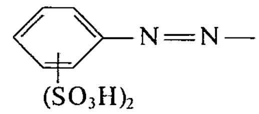

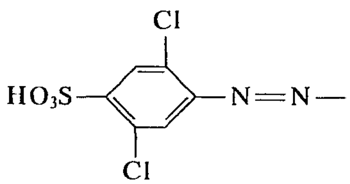
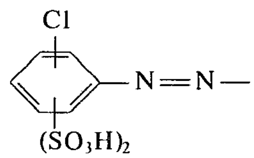
oder
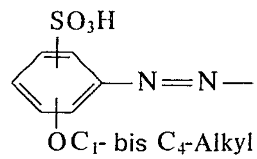

Einzelne Diazokomponenten sind beispielsweise:

Anilin, o-, m- oder p-Chloranilin, o-, m- oder p-Bromanilin, o-, m- oder p-Nitranilin, o-, m- oder p-Toluidin, o-, m- oder p-Anisidin, 2,5-Dichloranilin, 3,4-Dichloranilin, 2,4-Dichloranilin, 2,6-Dichloranilin, 1-Aminobenzol-2-sulfonsäure, 1-Aminobenzol-3-sulfosäure, 1-Aminobenzol-4-sulfonsäure, 2,5-Dichlor-1-aminobenzol-4-sulfosäure, 2,6-Dibrom-1-aminobenzol-4-sulfosäure, 1-Aminobenzol-2,4-disulfosäure, 1-Aminobenzol-2,5-disulfosäure, 2-Chlor-1-aminobenzol-4-sulfosäure, 4-Nitro-1-aminobenzol-2-sulfosäure, 2-Nitro-1-aminobenzol-4-sulfonsäure, 1-Aminobenzol-2-carbonsäure, 1-Aminobenzol-4-carbonsäure, 5-Sulfo-2-amino-benzoesäure, 1-Aminonaphthalin-4-sulfonsäure, 1-Aminonaphthalin-3,6-disulfosäure, 1-Aminonaphthalin-6/7-sulfosäure, 2-Aminonaphthalin-1-sulfosäure, 2-Aminonaphthalin-8-sulfosäure, 2-Aminonaphthalin-4,8-disulfosäure,

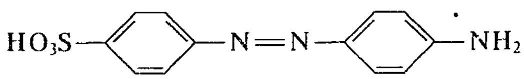

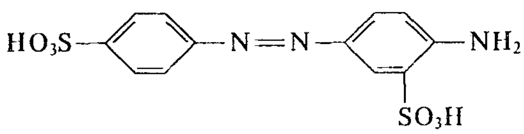

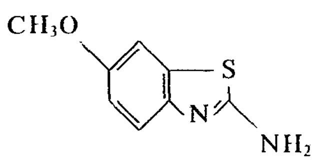
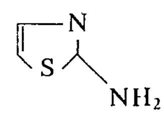

oder

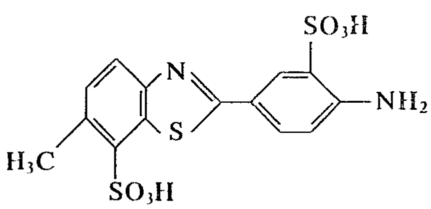

Zur Herstellung der Verbindungen der Formel I kann man eine Diazoverbindung von Aminen der Formel II

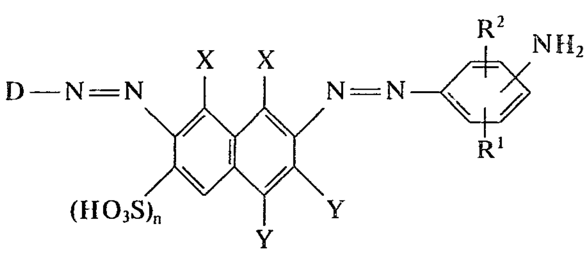
(II)

mit einer Kupplungskomponente der Formel III

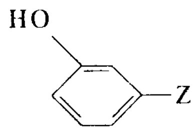

(III)

umsetzen, oder eine Tetrazokomponente der Formel IV

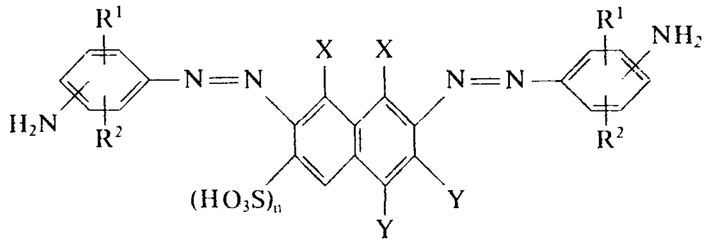

(IV)

mit einer Kupplungskomponente der Formel III umsetzen.

Die Herstellung der Verbindungen der Formeln II und IV ist im Prinzip bekannt oder erfolgt analog bekannten Methoden. Einzelheiten der Herstellung der Verbindungen der Formel I können den Beispielen entnommen werden, in denen sich Angaben über Teile und Prozente, sofern nicht anders vermerkt, auf das Gewicht beziehen.

Die Verbindungen der Formel I eignen sich vorzugsweise zum Färben von Leder, sowie für Polyamide, Baumwolle und Papier. Man erhält Färbungen, die sich durch gute Licht- und Naßechtheiten auszeichnen.

Von besonderer Bedeutung sind Verbindungen der Formel Ia

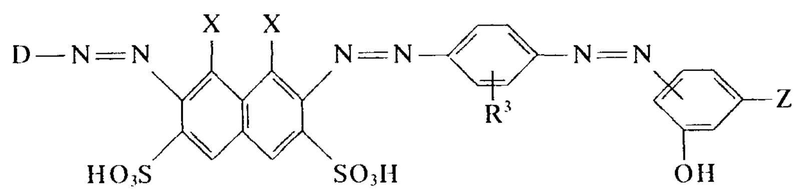

(Ia)

in der

$R^3$ Wasserstoff, Chlor oder Hydroxysulfonyl ist und D, X und Z die angegebene Bedeutung haben.

Für D sind insbesondere der Rest der Formel

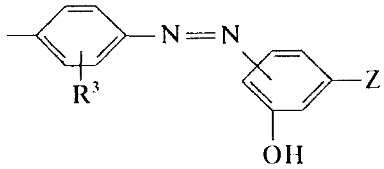

und für Z Morpholinyl, Piperidinyl und Pyrrolidinyl zu nennen.

Beispiel 1

7 Teile Natriumnitrit in 50 Teilen Wasser werden einer eiskalten Suspension von 13,8 Teilen 4-Nitroanilin in einer Mischung von 350 Teilen Wasser und 30 Teilen konzentrierter Salzsäure zugesetzt. Eine Lösung von 36,3 Teilen des Dinatriumsalzes von 1-Amino-8-naphthol-3,6-disulfonsäure in 250 Teilen Wasser wird dann im Verlauf von 30 min bei Raumtemperatur zugegeben und die Mischung wird 6 Stunden lang gerührt. Sie wird dann auf eine Temperatur unter 10°C abgekühlt und eine wäßrige Suspension des auf 17,3 Teilen Sulfanilinsäure hergestellten Diazoniumsalzes wird zugesetzt. Dann wird eine ausreichende Menge Natriumcarbonat zugegeben, um den pH-Wert der Mischung auf 9 zu erhöhen und die Rührbehandlung wird 2 Stunden lang bei 10°C fortgesetzt. Die Temperatur wird dann auf 45 bis 50°C erhöht und eine Lösung von 12,8 Teilen Natriumsulfid in 150 Teilen Wasser wird zugesetzt und die Rührbehandlung 30 min fortgesetzt. Die Lösung wird dann auf 20 bis 25°C abgekühlt, ausreichend Natriumchlorid wird zugesetzt, um eine Solenstärke von 20% zu ergeben, worauf dann konzentrierte Salzsäure zugesetzt wird, um die Mischung anzusäuern. Der ausgefällte Aminodisazofarbstoff wird abfiltriert und in 1000 Teilen Wasser bei Raumtemperatur suspendiert. 30 Teile konzentrierte Salzsäure werden zugesetzt und dann eine Lösung von 7 Teilen Natriumnitrit in 50 Teilen Wasser. Nach einer Rührbehandlung von 90 min wird der Überschuß an salpetriger Säure zerstört, und zwar durch Zusatz von 1 bis 2 Teilen Sulfaminsäure in 20 Teilen Wasser, und eine Lösung von 18 Teilen m-Morpholinophenol in 100 Teilen Wasser und 8 Teilen Natriumhydroxyd wird zugesetzt.

Anschließend wird das Kupplungsgemisch mit verdünnter Natronlauge auf einen pH-Wert von 9—10 eingestellt, über Nacht nachgerührt, mit Natriumchlorid ausgesalzen, abgesaugt und bei 100°C getrocknet. Man erhält ein schwarzes Pulver der Formel

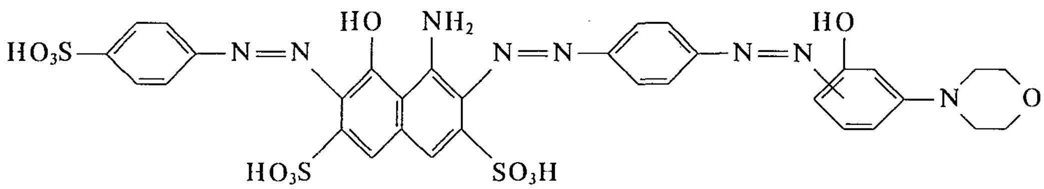

das Leder in satten blaustichigen Schwarztönen färbt. Die in der nachfolgenden Tabelle aufgeführten Farbstoffe wurden analog dem Beispiel 1 hergestellt.

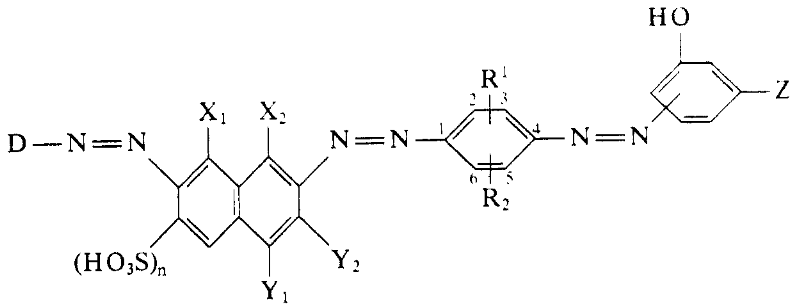

| Bsp. | D-$NH_2$ | n | $X_1$ | $X_2$ | $Y_1$ | $Y_2$ | $R_1$ | $R_2$ | Z | Farbton auf Leder |
|---|---|---|---|---|---|---|---|---|---|---|
| 2 | 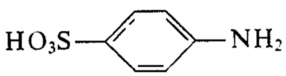 | 1 | OH | $NH_2$ | H | $SO_3H$ | 2-Cl | H | 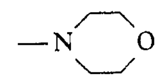 | schwarz, blaustichig |
| 3 | 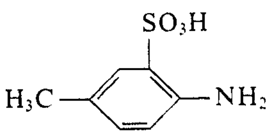 | 1 | OH | $NH_2$ | H | $SO_3H$ | H | H | desgl. | schwarz, blaustichig |
| 4 | 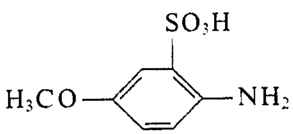 | 1 | OH | $NH_2$ | $SO_3H$ | H | H | H | desgl. | schwarz, blaustichig |
| 5 | 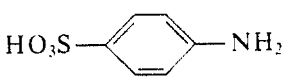 | 1 | $NH_2$ | OH | H | $SO_3H$ | H | H | 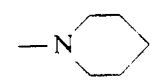 | schwarz, blaustichig |
| 6 | desgl. | 1 | OH | $NH_2$ | H | $SO_3H$ | 2-$OCH_3$ | H | desgl. | schwarz, blaustichig |
| 7 | 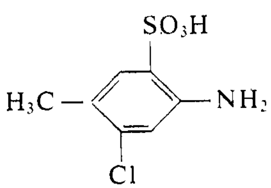 | 0 | OH | $NH_2$ | $SO_3H$ | H | 2-$SO_3H$ | H | 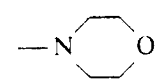 | schwarz, rotstichig |

(Fortsetzung)

| Bsp. | D−$NH_2$ | n | $X_1$ | $X_2$ | $Y_1$ | $Y_2$ | $R_1$ | $R_2$ | Z | Farbton auf Leder |
|---|---|---|---|---|---|---|---|---|---|---|
| 8 | 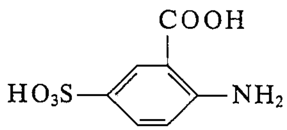 | 1 | OH | $NH_2$ | H | $SO_3H$ | 2-$SO_3H$ | H | 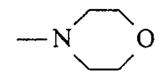 | schwarz, rotstichig |
| 9 | 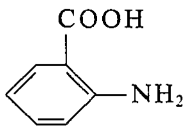 | 1 | OH | $NH_2$ | H | $SO_3H$ | H | H | 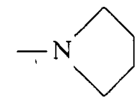 | schwarz, blaustichig |
| 10 | 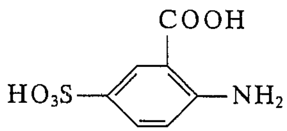 | 1 | OH | $NH_2$ | H | $SO_3H$ | H | H | 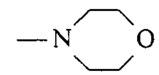 | schwarz, blaustichig |
| 11 | 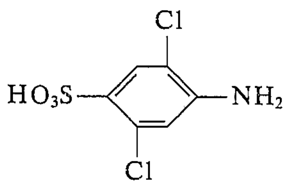 | 1 | OH | $NH_2$ | $SO_3H$ | H | H | H | desgl. | schwarz, rotstichig |
| 12 | 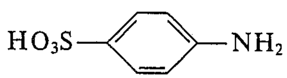 | 1 | OH | $NH_2$ | H | $SO_3H$ | 3-Cl | 6-$OCH_3$ | desgl. | schwarz, rotstichig |
| 13 | desgl. | 1 | OH | $NH_2$ | H | $SO_3H$ | 2-$OCH_3$ | 5-$OCH_3$ | 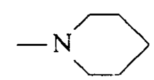 | schwarz, blaustichig |
| 14 | desgl. | 1 | $NH_2$ | OH | H | $SO_3H$ | 3-COOH | H | 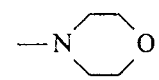 | schwarz, blaustichig |
| 15 | 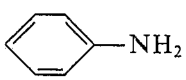 | 1 | OH | $NH_2$ | H | $SO_3H$ | 2-$SO_3H$ | H | 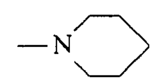 | schwarz, blaustichig |

(Fortsetzung)

| Bsp. | D-NH₂ | n | X₁ | X₂ | Y₁ | Y₂ | R₁ | R₂ | Z | Farbton auf Leder |
|---|---|---|---|---|---|---|---|---|---|---|
| 16 | 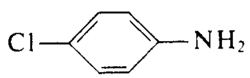 | 1 | OH | $NH_2$ | H | $SO_3H$ | 2-$SO_3H$ | H | 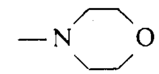 | schwarz, blaustichig |
| 17 | 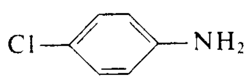 | 1 | $NH_2$ | OH | H | $SO_3H$ | 2-$SO_3H$ | H | desgl. | dunkelblau |
| 18 | 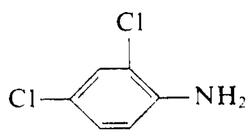 | 1 | OH | $NH_2$ | H | $SO_3H$ | 2-$SO_3H$ | H | desgl. | schwarz, rotstichig |
| 19 | 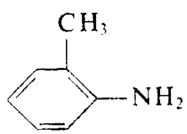 | 1 | OH | $NH_2$ | $SO_3H$ | H | 2-$SO_3H$ | H | desgl. | schwarz, blaustichig |
| 20 | 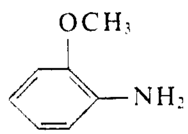 | 1 | OH | $NH_2$ | H | $SO_3H$ | 2-$SO_3H$ | H | desgl. | schwarz, blaustichig |
| 21 | 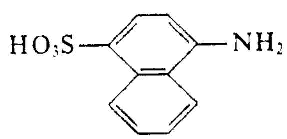 | 1 | OH | $NH_2$ | H | $SO_3H$ | H | H | desgl. | schwarz, blaustichig |
| 22 | 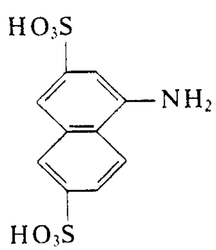 | 1 | OH | $NH_2$ | H | $SO_3H$ | H | H | desgl. | schwarz, blaustichig |

(Fortsetzung)

| Bsp. | $D-NH_2$ | n | $X_1$ | $X_2$ | $Y_1$ | $Y_2$ | $R_1$ | $R_2$ | Z | Farbton auf Leder |
|---|---|---|---|---|---|---|---|---|---|---|
| 23 | 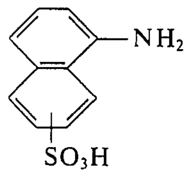 | 1 | OH | $NH_2$ | H | $SO_3H$ | H | H | 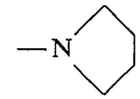 | schwarz, blaustichig |
| 24 | 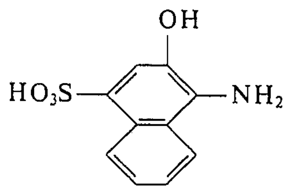 | 1 | OH | $NH_2$ | H | $SO_3H$ | H | H | 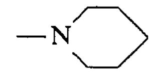 | dunkelblau |
| 25 | 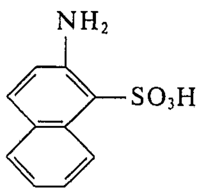 | 1 | OH | $NH_2$ | H | $SO_3H$ | H | H | 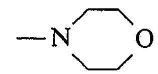 | dunkelblau |
| 26 | 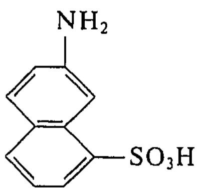 | 1 | OH | $NH_2$ | H | $SO_3H$ | H | H | desgl. | dunkelblau |
| 27 | 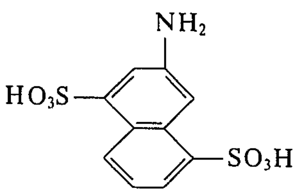 | 0 | OH | $NH_2$ | $SO_3H$ | H | H | H | desgl. | dunkelblau |
| 28 | 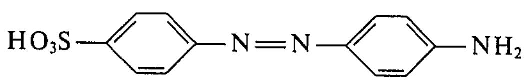 | 1 | OH | $NH_2$ | H | $SO_3H$ | 2-$SO_3H$ | H | 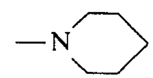 | dunkelblau |

(Fortsetzung)

| Bsp. | D−NH₂ | n | $X_1$ | $X_2$ | $Y_1$ | $Y_2$ | $R_1$ | $R_2$ | Z | Farbton auf Leder |
|---|---|---|---|---|---|---|---|---|---|---|
| 29 | 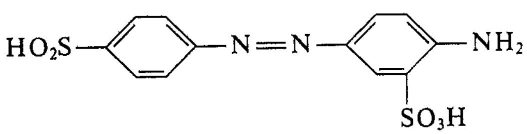 | 1 | OH | $NH_2$ | H | $SO_3H$ | H | H | desgl. | schwarz, blaustichig |
| 30 | 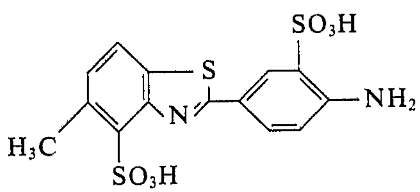 | 1 | OH | $NH_2$ | $SO_3H$ | H | H | H | 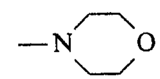 | schwarz, blaustichig |

| Bsp. | Formel | Farbton auf Leder |
| --- | --- | --- |
| 31 | 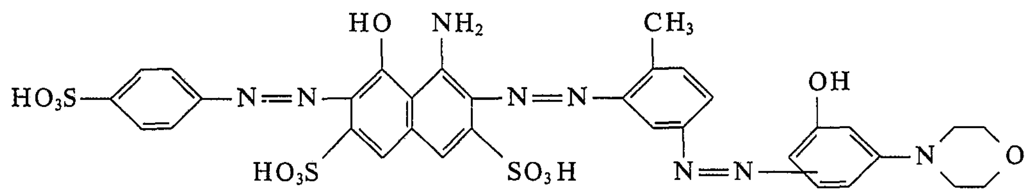 | dunkelblau |
| 32 | 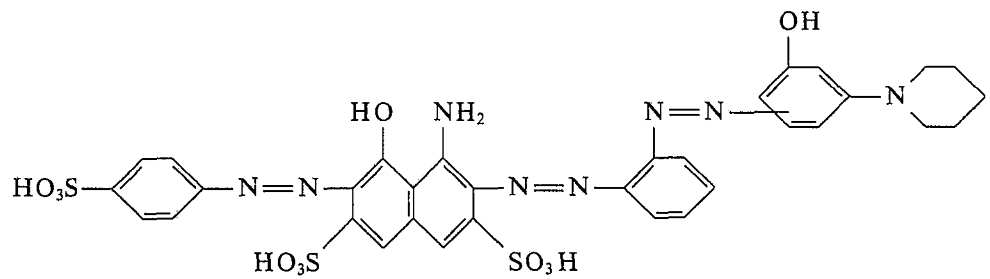 | schwarz grünstichig |
| 33 | 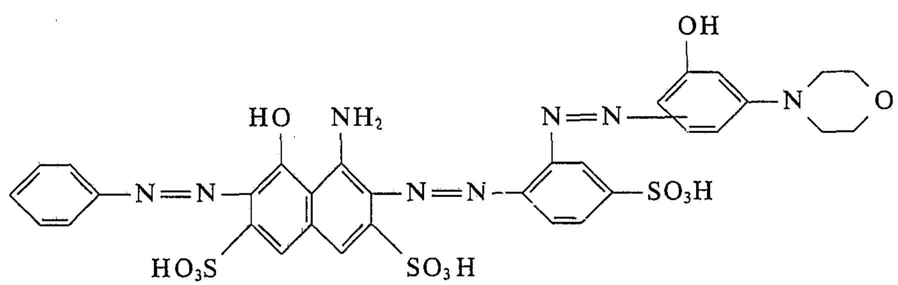 | schwarz grünstichig |
| 34 | 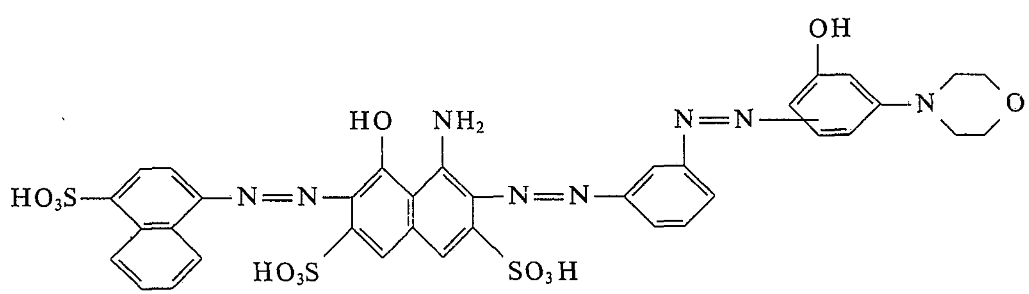 | schwarz blaustichig |

Beispiel 35

40 Teile p-Nitranilin werden mit 375 Teilen Wasser einige Stunden verrührt. Dann wird mit Eis auf 0°C gestellt und mit 78 Volumenteilen Salzsäure 19°Bé versetzt. Wenn alles gut verrührt ist, werden 87 Volumenteile Natriumnitritlösung (23 Vol.-%) zugesetzt und nach beendeter Diazotierung mit Amidosulfonsäure der Nitritüberschuß zerstört. Die so erhaltene Diazoniumsalzlösung wird bei 0—5°C einer wie im folgenden beschrieben hergestellten Aufschlämmung von 1-Amino-8-naphthol-3,6-disulfonsäure zugesetzt und etwa 3 Stunden bei 0—5°C gehalten:

41,6 Teile 1-Amino-8-naphthol-3,6-disulfosäure werden in Wasser neutral gelöst, dann läßt man diese Lösung zu einer Mischung von 225 Teilen Wasser, 18 Volumenteilen Salzsäure 19°Bé und Eis laufen, wobei die 1-Amino-8-naphthol-3,6-disulfosäure in feinkristalliner Form ausfällt. Nach etwa 3 Stunden läßt man in 30 Minuten eine wäßrige Lösung von 45 Teilen Soda zulaufen, wobei sich ein pH von 7,5—8 einstellt. Temperatur: 0—5°C.

Nach etwa 16 Stunden bei 0—5°C gibt man eine wäßrige Lösung von 40,5 Teilen Schwefelnatrium (60%) zu, wobei die Temperatur auf 25—30°C steigt und der reduzierte Disazofarbstoff in Lösung geht. In 20 Minuten ist die Reduktion zu Ende und man stellt mit 165 Volumenteilen Salzsäure 19°Bé kongosauer und filtriert das ausgefallene Reduktionsprodukt ab.

Die so erhaltene Paste des Reduktionsprodukts wird in 500 Teilen Wasser von 70°C verrührt und durch Zugabe von 30 Teilen Soda gelöst. Dann werden 36 Teile Aktivkohle und 1,2 Teile Eisensulfat zugegeben. Nach einstündigem Rühren wird die Lösung filtriert.

Das Filtrat wird mit 67 Volumenteilen Natriumnitritlösung (23 Vol.-%) versetzt, mit Eis auf 25—30°C gestellt und einem Gemisch von 75 Teilen Wasser, 85 Volumenteilen Salzsäure 19°Bé und Eis (Temperatur 0—5°C) zugesetzt. Nach 4stündigem Rühren wird mit 90 Volumenteilen 10%iger Sodalösung auf pH 2,5 gestellt.

Danach läßt man die Tetrazotierungslösung zu einer Lösung von 48,3 Teilen 3-Morpholino-phenol, 540 Teilen Wasser und 27 Volumenteilen Natronlauge 40°Bé laufen. Die Kupplungstemperatur wird durch Eiszugabe auf 0—5°C gehalten; der pH-Wert des Reaktionsgemisches wird mit verdünnter Natronlauge auf 10 eingestellt. Nach dem Rühren über Nacht ist die Kupplung beendet. Man erwärmt die Farbstofflösung auf etwa 60°C, versetzt mit Natriumchlorid und saugt nach 2 Stunden ab. Nach dem Trocknen bei 60°C unter vermindertem Druck erhält man die Verbindung der Formel

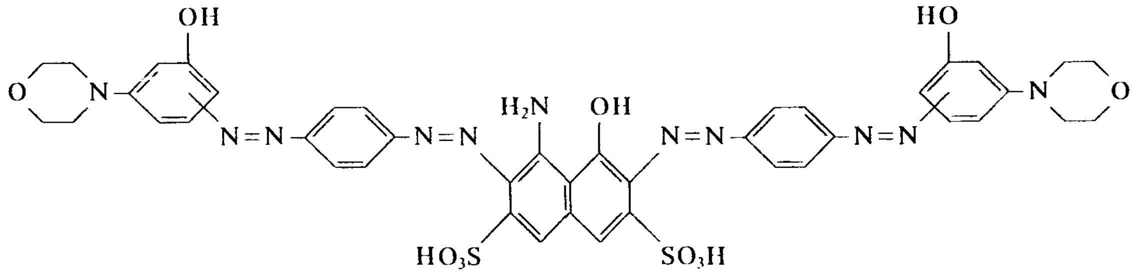

als dunkles Pulver, das Leder in blaustichigen Schwarztönen mit guten Echtheiten färbt.

In der folgenden Tabelle sind Farbstoffe aufgeführt, die sich analog dem Beispiel 35 und 1 aus den angegebenen Komponenten herstellen lassen und ähnliche Farbtöne auf Leder erzeugen.

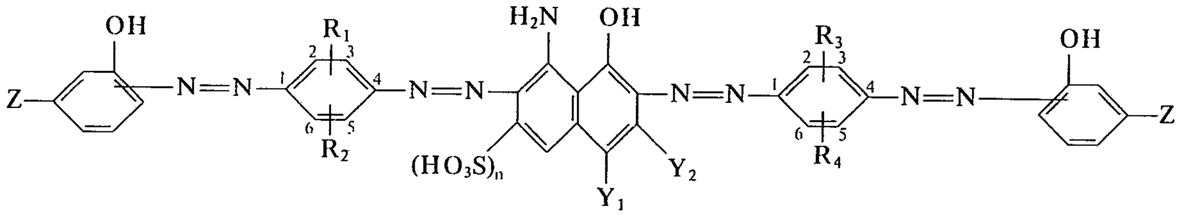

| Bsp. | $R_1$ | $R_2$ | n | $Y_1$ | $Y_2$ | $R_3$ | $R_4$ | Z |
|---|---|---|---|---|---|---|---|---|
| 36 | H | H | 1 | H | $SO_3H$ | 2-$SO_3H$ | H | 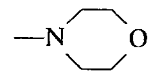 |
| 37 | H | H | 1 | H | $SO_3H$ | H | H | 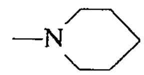 |
| 38 | 3-$SO_3H$ | H | 1 | H | $SO_3H$ | 2-$SO_3H$ | H | 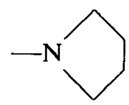 |
| 39 | H | H | 1 | $SO_3H$ | H | H | H | 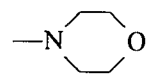 |
| 40 | 3-Cl | H | 1 | H | $SO_3H$ | 2-$SO_3H$ | H | desgl. |
| 41 | 3-$SO_3H$ | H | 1 | H | $SO_3H$ | 2-$OCH_3$ | H | desgl. |
| 42 | 3-$SO_3H$ | H | 1 | H | $SO_3H$ | 2-$CH_3$ | H | 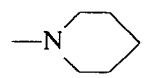 |
| 43 | H | H | 1 | H | $SO_3H$ | 2-COOH | H | 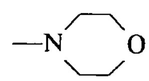 |
| 44 | 3-$SO_3H$ | 6-$OCH_3$ | O | $SO_3H$ | H | 2-$SO_3H$ | H | desgl. |
| 45 | 3-$SO_3H$ | H | 1 | H | $SO_3H$ | 2-$SO_3H$ | H | 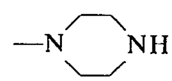 |
| 46 | 3-$SO_3H$ | H | 1 | H | $SO_3H$ | 2-$SO_3H$ | H | 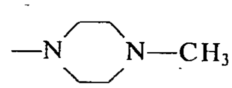 |
| 47 | 3-$SO_3H$ | H | 1 | $SO_3H$ | H | 2-COOH | H | desgl. |
| 48 | H | H | 1 | H | $SO_3H$ | 2-$SO_3H$ | H | 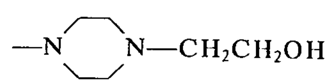 |

| Bsp. | Formel |
|---|---|
| 49 | 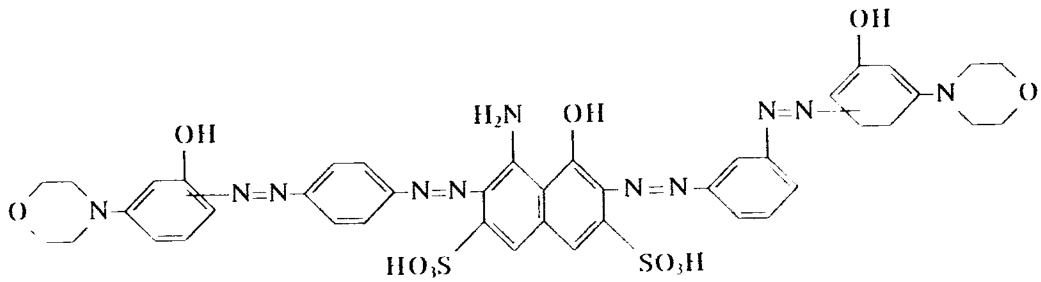 |
| 50 | 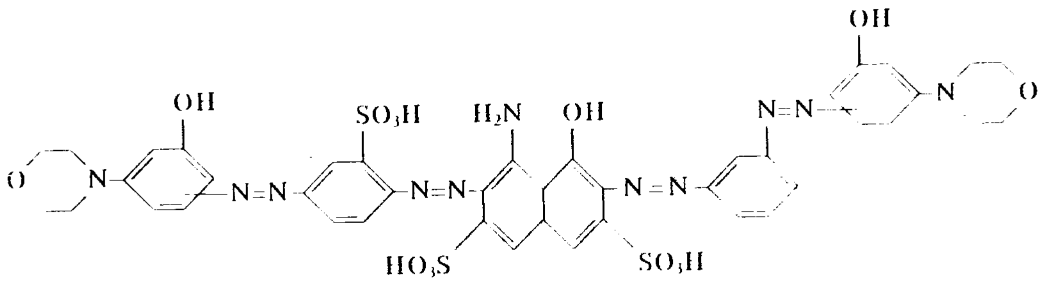 |
| 51 | 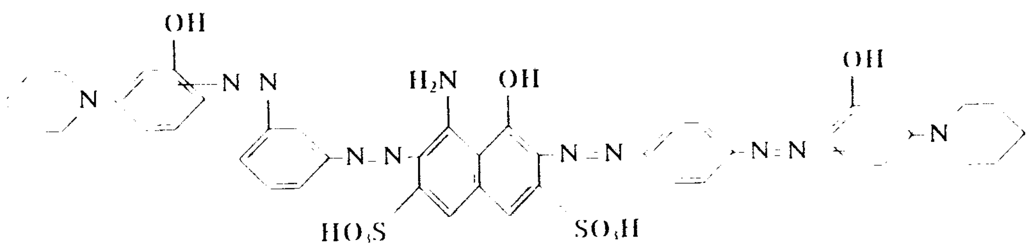 |
| 52 | 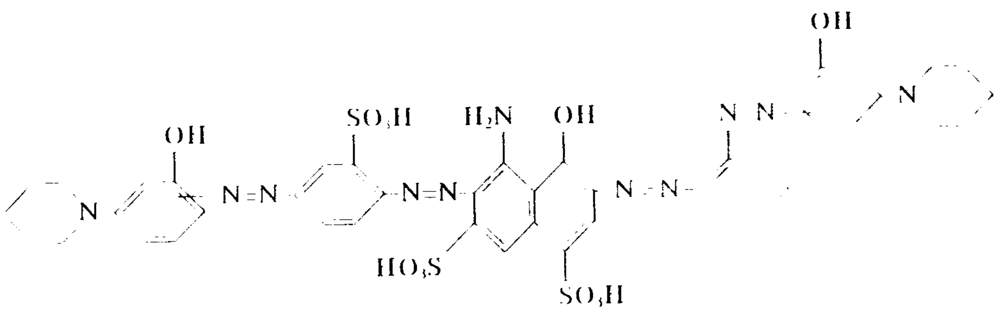 |
| 53 | 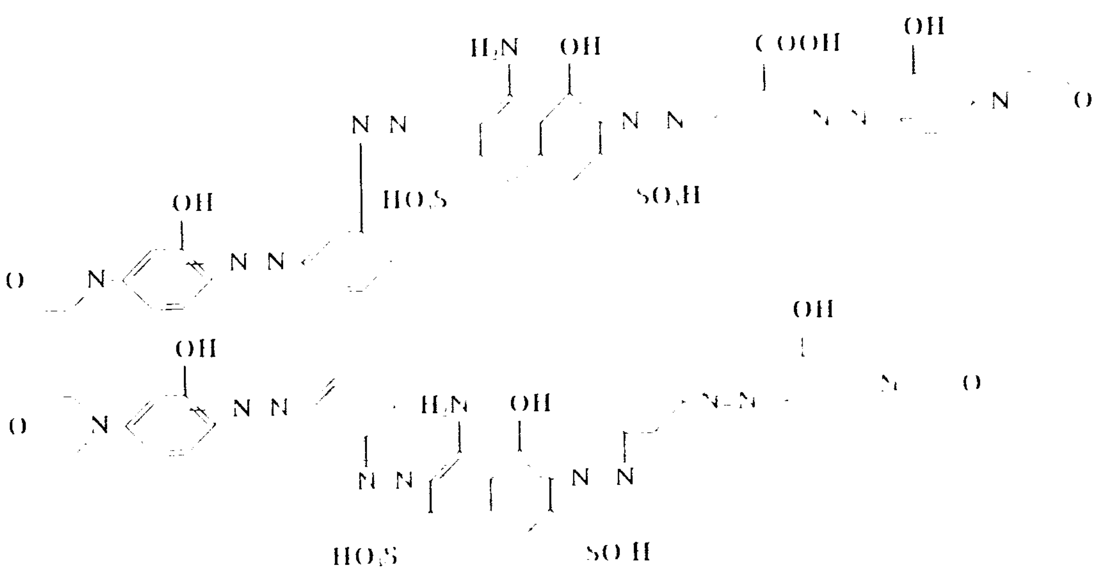 |
| 54 | |

**Patentansprüche**

1. Polyazofarbstoffe, die in Form der freien Säuren der allgemeinen Formel I

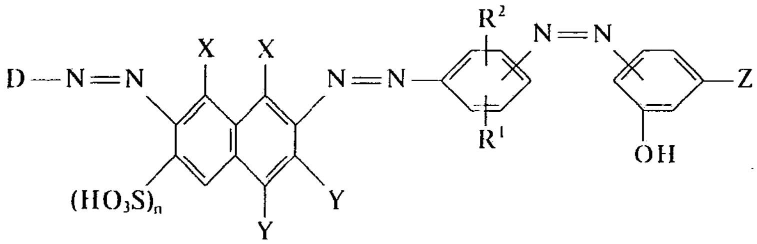 (I)

entsprechen,
in der

D den Rest einer Diazokomponente oder einen Rest der Formel

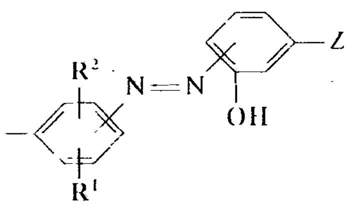

n die Zahlen 0 oder 1,
$R^1$ Wasserstoff, Chlor, Brom, Methyl, Äthyl, Methoxy, Äthoxy, Carboxyl, Trifluormethyl, Methylsulfonyl, Äthylsulfonyl oder Hydroxysulfonyl,
$R^2$ Wasserstoff, Chlor, Brom, Methyl, Methoxy, Carbamoyl oder Sulfamoyl, ein Rest
X Hydroxy und der andere Rest
X Amino,
Y Wasserstoff oder Hydroxysulfonyl, wobei ein Rest Y Hydroxysulfonyl ist, und
Z einen Rest der Formel

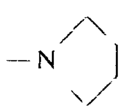 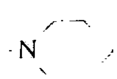 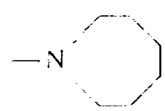 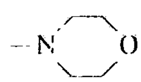 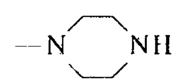

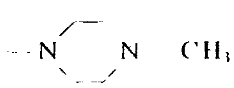 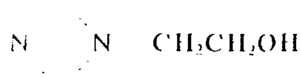 oder 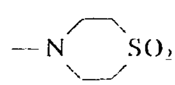

bedeuten, wobei die Reste $R^1$ und $R^2$ unabhängig voneinander die angegebenen Bedeutungen haben können.

2. Verbindungen gemäß Anspruch 1 der allgemeinen Formel

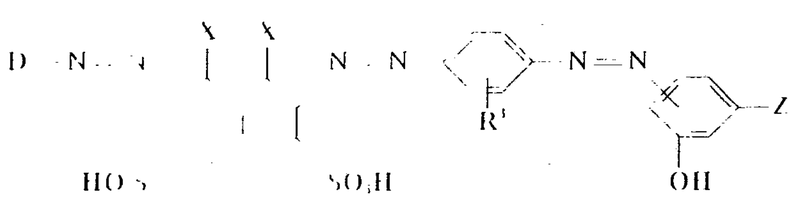 (Ia)

in der
$R^1$ Wasserstoff, Chlor oder Hydroxysulfonyl ist und D, X und Z die angegebene Bedeutung haben.

3. Verwendung der Verbindungen gemäß Anspruch 1 und 2 zum Färben von Leder.

## Claims

1. A polyazo dye which in the form of the free acid corresponds to the general formula I

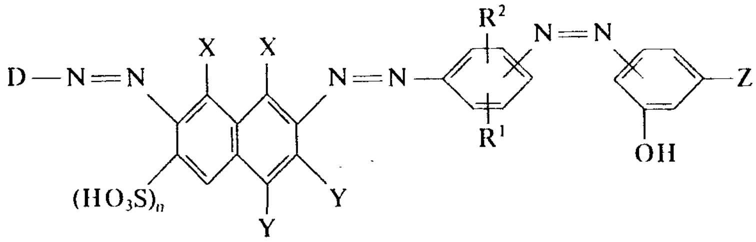

(I)

where

D is the radical of a diazo component, or a radical of the formula

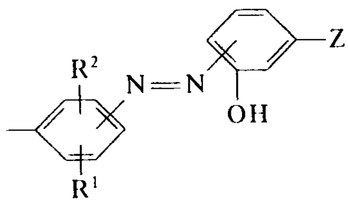

n is 0 or 1,
$R^1$ is hydrogen, chlorine, bromine, methyl, ethyl, methoxy, ethoxy, carboxyl, trifluormethyl, methylsulfonyl, ethylsulfonyl or hydroxysulfonyl,
$R^2$ ist hydrogen, chlorine, bromine, methyl, methoxy, carbamyl or sulfamyl, one
X is hydroxyl and the other X is amino,
Y is hydrogen or hydroxysulfonyl, one Y being hydroxysulfonyl, and
Z is a radical of the formula

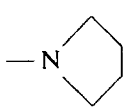 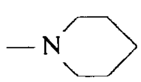 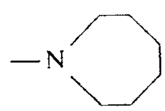 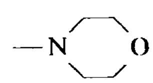 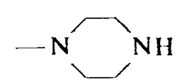

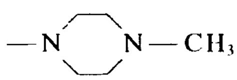 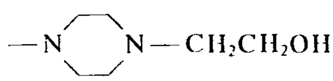 or 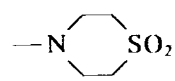

it being possible for the radicals $R^1$ and $R^2$ independently of one another to have the stated meanings.

2. A compound as claimed in claim 1, of the general formula

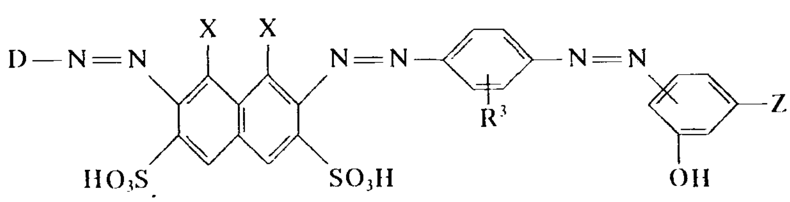

(Ia)

where $R^3$ is hydrogen, chlorine or hydroxysulfonyl and D, X and Z have the stated meanings.

3. Use of a compound as claimed in claims 1 and 2 for dyeing leather.

**Revendications**

1. Colorants polyazoïques qui, sous la forme des acides libres, répondent à la formule générale I

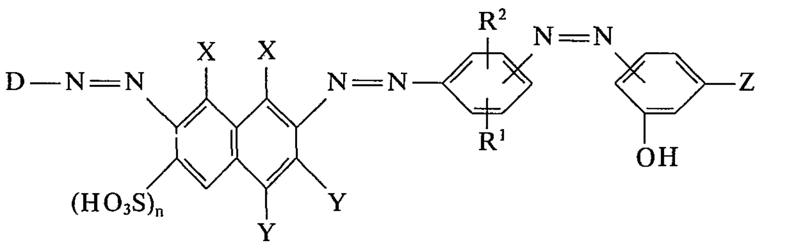

(I)

dans laquelle

D représente le radical d'un composant diazoïque ou un radical de formule

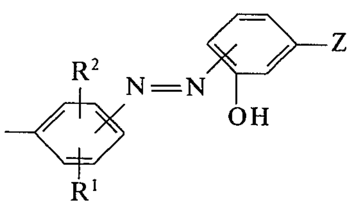

n les nombres 0 ou 1,
$R^1$ un hydrogène, un chlore, un brome, un méthyle, un éthyle, un méthoxy, un éthoxy, un carboxyle, un trifluorométhyle, un méthylsulfonyle, un éthylsulfonyle ou un hydroxysulfonyle,
$R^2$ un hydrogène, un chlore, un brome, un méthyle, un méthoxy, un carbamoyle ou un sulfamoyle, l'un des radicaux
X un hydroxy et l'autre radical
X un amino,

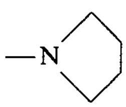 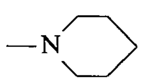 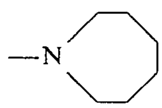 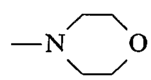 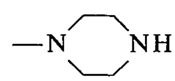

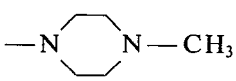 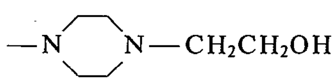 ou 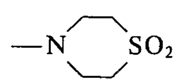

les radicaux $R^1$ et $R^2$ pouvant avoir les significations données indépendamment l'un de l'autre.

2. Composés selon la revendication 1, de formule générale

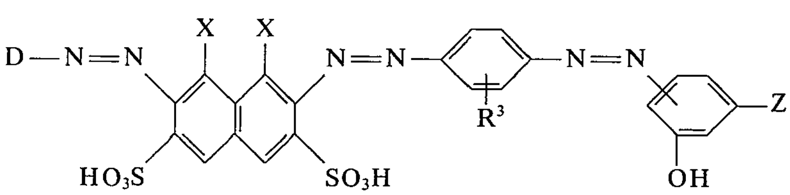

(Ia)

dans laquelle
$R^3$ est un hydrogène, un chlore ou un hydroxysulfonyle et D, X et Z ont les significations déjà données.

3. Utilisation des composés selon la revendication 1 ou 2 pour la teinture de cuirs.